# FASCICULE DE BREVET EUROPEEN

(11) **EP 2 167 384 B1**
(45) Date de publication et mention de la délivrance du brevet: **11.05.2011**
(21) Numéro de dépôt: 08761209.9
(22) Date de dépôt: 19.06.2008
(51) Int. Cl.: B64D 27/26

(54) **MÂT D'ACCROCHAGE DE MOTEUR POUR AÉRONEF DISPOSANT D'UNE POUTRE D'ATTACHE MOTEUR ARRIÈRE FORMANT PALONNIER**
GONDELSTIEL ZUR KUPPLUNG EINES TRIEBWERKS FÜR EIN LUFTFAHRZEUG MIT EINEM EINE RUDERSTEUERSTANGE BILDENDEN HECKTRIEBWERKSBEFESTIGUNGSTRÄGER
PYLON FOR COUPLING AN ENGINE FOR AN AIRCRAFT HAVING A REAR ENGINE ATTACHMENT BEAM FORMING A RUDDER CONTROL BAR

(30) Priorité: 20.06.2007 FR 0755887
(43) Date de publication de la demande: 31.03.2010
(73) Titulaire: AIRBUS OPERATIONS, 31060 Toulouse (FR)
(72) Inventeur: HARAMBURU, Eric, F-31000 Toulouse (FR); SAMMITO, Laurent, F-31300 Toulouse (FR); LARROCHELLE, Jean, F-31200 Toulouse (FR)
(74) Mandataire: Ilgart, Jean-Christophe
(86) Numéro de dépôt international: PCT/EP2008/057768
(87) Numéro de publication internationale: WO 2008/155376

(56) Documents cités:
- EP-A- 0 564 126
- EP-A- 1 136 355
- WO-A-2006/097484

## Description

### DOMAINE TECHNIQUE

La présente invention se rapporte de façon générale à un ensemble moteur pour aéronef, du type comprenant un moteur, un mât d'accrochage, ainsi qu'un système de montage du moteur pourvu d'une pluralité d'attaches moteur et étant interposé entre une structure rigide du mât d'accrochage et le moteur.

L'invention se rapporte également à un tel mât d'accrochage de moteur d'aéronef.

L'invention peut être utilisée sur tout type d'aéronef équipé par exemple de turboréacteurs ou de turbopropulseurs.

Ce type de mât d'accrochage, également appelé « EMS » (de l'anglais « Engine Mounting Structure »), permet par exemple de suspendre un turbomoteur au-dessous de la voilure de l'aéronef, ou bien de monter ce turbomoteur au-dessus de cette même voilure.

### ÉTAT DE LA TECHNIQUE ANTÉRIEURE

Un tel mât d'accrochage est en effet prévu pour constituer l'interface de liaison entre un moteur tel qu'un turboréacteur et une voilure de l'aéronef. Il permet de transmettre à la structure de cet aéronef les efforts générés par son turboréacteur associé, et autorise également le cheminement du carburant, des systèmes électriques, hydrauliques, et air entre le moteur et l'aéronef.

Afin d'assurer la transmission des efforts, le mât comporte une structure rigide, également dite structure primaire et souvent du type « caisson », c'est-à-dire formée par l'assemblage de longerons supérieur et inférieur et de deux panneaux latéraux raccordés entre eux par l'intermédiaire de nervures transversales.

D'autre part, le mât est muni d'un système de montage du moteur interposé entre le turboréacteur et la structure rigide du mât, ce système comportant globalement au moins deux attaches moteur, généralement une attache avant et une attache arrière.

De plus, le système de montage comprend un dispositif de reprise des efforts de poussée générés par le turboréacteur. Dans l'art antérieur, ce dispositif prend par exemple la forme de deux bielles latérales raccordées d'une part à une partie arrière du carter de soufflante du turboréacteur, et d'autre part à un palonnier, lui-même monté articulé sur un corps d'attache moteur arrière fixé sur le caisson.

De la même façon, le mât d'accrochage comporte également un second système de montage interposé entre la structure rigide de ce mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

Dans les réalisations de l'art antérieur, le système de montage du moteur comporte une attache moteur arrière dont le corps est, comme évoqué ci-dessus, directement rapporté sur le longeron inférieur du caisson, avec lequel il est habituellement en contact. Le corps d'attache, également dénommé poutre transversale, porte également de manière articulée le palonnier, qui reçoit à ses extrémités les bielles de reprise des efforts de poussée, comme cela est connu des documents EP 1 136 355 et US 6 494 403.

Cette configuration implique diverses inconvénients parmi lesquels on compte en particulier la complexité de conception de la partie arrière du système de montage du moteur, qui se traduit par des temps de montage et démontage importants, donc coûteux. De plus, cette configuration conduit à un fort encombrement constituant un obstacle important dans la zone d'écoulement du flux secondaire, et provoque donc des perturbations aérodynamiques non négligeables. Les perturbations aérodynamiques rencontrées au droit de l'attache moteur arrière provoquent une traînée se traduisant par des pertes de performances de l'aéronef.

Enfin, on note qu'un autre inconvénient de ce type de réalisation, dans lequel le palonnier est articulé sur la poutre d'attache moteur arrière elle-même fixée sur le longeron inférieur de la structure primaire, réside dans le cumul de plusieurs chemins d'efforts distincts sur cette même attache moteur arrière, rendant sa conception assez compliquée.

### EXPOSÉ DE L'INVENTION

L'invention a donc pour but de proposer un mât d'accrochage de moteur pour aéronef remédiant au moins partiellement aux inconvénients mentionnés ci-dessus, relatifs aux réalisations de l'art antérieur.

Pour ce faire, l'invention a pour objet un mât d'accrochage pour moteur d'aéronef, ledit mât comportant une structure rigide formant caisson ainsi qu'un système de montage du moteur monté sur ladite structure rigide et comportant notamment une attache moteur arrière comprenant un corps d'attache sur lequel est articulée au moins une manille également destinée à être articulée sur le moteur, ledit système de montage du moteur comprenant en outre un dispositif de reprise des efforts de poussée générés par le moteur, comportant deux bielles latérales raccordées à leur extrémité arrière à un palonnier monté articulé par rapport audit caisson. Selon l'invention, ledit corps d'attache de l'attache moteur arrière constitue ledit palonnier sur lequel lesdites deux bielles latérales sont raccordées, ledit corps d'attache étant monté articulé par rapport audit caisson à l'aide d'un système d'axe d'articulation.

La particularité de l'invention réside donc dans le fait de monter le corps de l'attache moteur arrière de façon articulée par rapport à la structure rigide formant caisson, de manière à ce qu'il forme simultanément le palonnier du dispositif de reprise des efforts de poussée intégrant les bielles latérales.

De par cette double fonctionnalité du corps d'attache, on obtient une simplification notable de la conception de la partie arrière du système de montage du moteur, ainsi qu'un plus faible encombrement. Les temps de montage et démontage du moteur sur le mât sont par conséquent réduits, et les perturbations aérodynamiques du flux secondaire minimisées.

De préférence, ledit corps d'attache est monté articulé sur une ferrure de support montée fixement sur ledit caisson, ladite ferrure de support intégrant un pion appartenant audit système d'axe d'articulation, et logé dans un orifice correspondant dudit corps d'attache. Naturellement, il est également possible de prévoir un agencement inversé dans lequel le pion est porté par le corps d'attache et l'orifice correspondant pratiqué dans la ferrure de support, sans sortir du cadre de l'invention. De même, une autre solution envisageable serait de prévoir le système d'axe d'articulation traversant chacun des corps d'attache et ferrure de support.

Dans le cas préféré où le système d'axe d'articulation, donc en particulier le pion précité, est agencé selon la direction verticale, la coopération entre ce pion et l'orifice correspondant permet d'assurer la reprise des efforts s'exerçant selon les directions longitudinale et transversale.

De préférence, le mât d'accrochage comprend également un système de tirant permettant de retenir ledit corps d'attache par rapport à la ferrure de support selon la direction d'un axe d'articulation du palonnier défini par ledit système d'axe, ledit système de tirant traversant chacun desdits corps d'attache et ferrure de support, ainsi que ledit pion formant pion creux. Ainsi, ce système de tirant permet de venir compléter l'attache moteur arrière en assurant la reprise des efforts s'exerçant selon la direction verticale, lorsqu'il est agencé selon cette même direction.

Préférentiellement, ledit corps d'attache présente deux moyens de réception coopérant respectivement avec les deux bielles latérales, lesdits deux moyens de réception étant agencés, en vue de face, de part et d'autre du système d'axe d'articulation, et ce dans le but connu d'obtenir une égale répartition des efforts transitant dans les bielles de reprise des efforts de poussée. Dans une telle configuration, on prévoit que lesdits deux moyens de réception prennent chacun la forme d'une chape réalisée d'un seul tenant avec ledit corps d'attache.

Toujours de manière préférentielle, le mât d'accrochage comprend des moyens de butée montés sur la structure rigide formant caisson et positionnés de manière à pouvoir stopper, dans le deux sens, la rotation du palonnier autour de son axe d'articulation défini par ledit système d'axe.

Ainsi, en cas de défaillance au niveau de ce dispositif de reprise, pouvant par exemple prendre la forme d'une rupture de bielle ou d'un axe établissant la liaison entre l'une de ces bielles et le palonnier, la rotation de ce dernier, constituée par le corps d'attache moteur arrière, peut être stoppée par les moyens de butée prévus à cet effet. Lorsqu'une telle situation se produit, la reprise des efforts de poussée est alors avantageusement assurée par l'une des deux bielles seulement, en combinaison avec la/les butées entre le palonnier et les moyens de butée judicieusement positionnés.

De préférence, ladite ferrure de support comprend deux saillies latérales logées avec jeu respectivement dans deux fentes pratiquées dans ledit corps d'attache, lesdites fentes et saillies formant conjointement lesdits moyens de butée. Il pourrait alternativement être envisagé de prévoir les saillies sur le palonnier et les fentes correspondantes sur la ferrure de support, sans sortir du cadre de l'invention.

Plus généralement, on prévoit que les moyens de butée comprennent des saillies latérales solidaires de la structure primaire et coopérant respectivement avec des fentes latérales pratiquées dans le corps d'attache, ou inversement.

Alternativement, les saillies latérales peuvent être portées par le système d'axe et coopérer respectivement avec des fentes latérales prévues sur le corps d'attache, ou inversement.

Enfin, ils peuvent alternativement comprendre au moins un élément de butée qui d'une part traverse le corps d'attache en étant solidaire de celui-ci, et d'autre part traverse le système d'axe avec jeu, ledit élément de butée pouvant pivoter librement avec le corps d'attache selon l'axe de palonnier jusqu'à avoir consommé le jeu entre ce même élément de butée et ledit système d'axe, ce qui permet alors de bloquer la rotation du corps d'attache lors d'une défaillance. Inversement, ledit au moins un élément de butée pourrait être solidaire du système d'axe et monté avec jeu à travers le corps d'attache, pour lequel il pourrait alors constituer une butée suite à un pivotement trop important de ce corps, traduisant une défaillance.

De manière préférée, comme mentionné ci-dessus, ledit système d'axe d'articulation est agencé sensiblement verticalement, donc sensiblement parallèlement au plan transversal du corps d'attache moteur arrière en forme de poutre.

Enfin, on prévoit que ledit caisson est formé par l'assemblage d'un longeron supérieur, d'un longeron inférieur, de deux panneaux latéraux et de nervures transversales reliant lesdits longerons et panneaux, ledit corps d'attache moteur arrière formant palonnier étant situé sous ledit longeron inférieur. Ceci s'applique dans le cas préféré où le moteur est destiné à être suspendu sous la voilure de l'aéronef.

L'invention a également pour objet un ensemble moteur pour aéronef comprenant un mât tel que celui qui vient d'être présenté, ainsi qu'un moteur fixé sur ce mât.

Enfin, elle a pour objet un aéronef comprenant au moins un tel ensemble moteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partiellement schématique de côté d'un ensemble moteur pour aéronef, comprenant un mât d'accrochage selon un mode de réalisation préféré de la présente invention ;
- la figure 2 représente une vue partielle détaillée en perspective de la partie arrière du système de montage du moteur, appartenant au mât montré sur la figure 1 ;
- la figure 3 représente une vue en coupe longitudinale passant par le plan de symétrie P de la figure 2 ;
- la figure 4 représente une vue en coupe passant par le plan horizontal P1 des figures 2 et 3, la demi-coupe de gauche montrant la configuration normale dite non dégradée, et la demi-coupe de droite montrant la configuration dite dégradée, adoptée suite à la rupture de l'une des bielles latérales de reprise des efforts de poussée ;
- la figure 5 représente une vue similaire à celle de la figure 2, avec la partie arrière du système de montage du moteur réalisée selon un autre mode de réalisation préféré de la présente invention ;
- la figure 6 représente une vue en coupe longitudinale passant par le plan de symétrie P de la figure 5 ; et
- la figure 7 représente une vue en coupe passant par le plan horizontal P1 des figures 5 et 6.

### EXPOSÉ DÉTAILLÉ DE MODES DE RÉALISATION PARTICULIERS

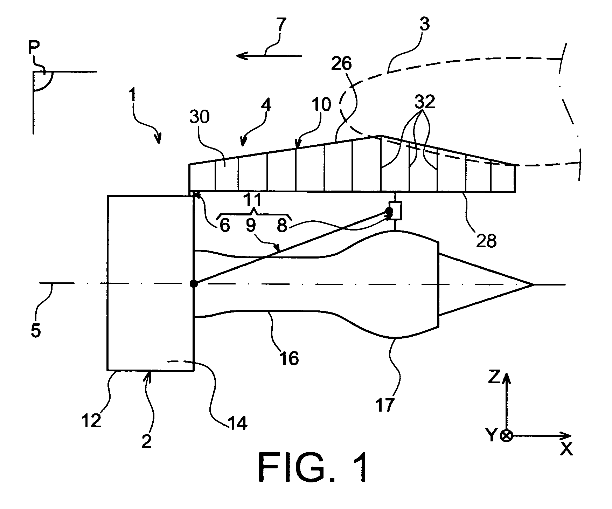

En référence à la figure 1, on voit un ensemble moteur 1 pour aéronef destiné à être fixé sous une aile 3 de cet aéronef, cet ensemble 1 objet de la présente invention étant pourvu d'un mât d'accrochage 4 se présentant sous la forme d'un mode de réalisation préféré de la présente invention.

Globalement, l'ensemble moteur 1 comporte un moteur tel qu'un turboréacteur 2 et le mât d'accrochage 4, ce dernier étant notamment muni d'une structure rigide 10 et d'un système de montage du moteur 11 composé d'une pluralité d'attaches moteur 6, 8 et d'un dispositif de reprise des efforts de poussée 9 généré par le turboréacteur 2, le système de montage 11 étant donc interposé entre le moteur et la structure rigide 10 précitée, cette dernière étant également dénommée structure primaire. A titre indicatif, il est noté que l'ensemble 1 est destiné à être entouré d'une nacelle (non représentée), et que le mât d'accrochage 4 comporte une autre série d'attaches (non représentées) permettant d'assurer la suspension de cet ensemble 1 sous la voilure de l'aéronef.

Dans toute la description, par convention, on appelle X la direction longitudinale du mât 4 qui est également assimilable à la direction longitudinale du turboréacteur 2, cette direction X étant parallèle à un axe longitudinal 5 de ce turboréacteur 2. D'autre part, on appelle Y la direction orientée transversalement par rapport au mât 4 et également assimilable à la direction transversale du turboréacteur 2, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 2, cette direction étant représentée schématiquement par la flèche 7.

Sur la figure 1, on peut voir que seuls le dispositif de reprise 9, les attaches moteur 6, 8, et la structure rigide 10 du mât d'accrochage 4 ont été représentés. Les autres éléments constitutifs non représentés de ce mât 4, tels que les moyens d'accrochage de la structure rigide 10 sous la voilure de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

Le turboréacteur 2 dispose à l'avant d'un carter de soufflante 12 de grande dimension délimitant un canal annulaire de soufflante 14, et comporte vers l'arrière un carter central 16 de plus petite dimension, renfermant le coeur de ce turboréacteur. Enfin, le carter central 16 se prolonge vers l'arrière par un carter d'éjection 17 de plus grande dimension que celle du carter 16. Les carters 12, 16 et 17 sont bien entendu solidaires les uns des autres.

Comme on peut l'apercevoir sur la figure 1, le système 11 est constitué par une attache moteur avant 6, une attache moteur arrière 8, ainsi qu'une attache 9 formant un dispositif de reprise des efforts de poussée générés par le turbomoteur 2. Comme cela est montré schématiquement sur le figure 1, ce dispositif 9 prend la forme de deux bielles latérales (une seule étant visible en raison de la vue de côté) raccordées d'une part à une partie arrière du carter de soufflante 12, et d'autre part à un palonnier monté articulé par rapport au caisson 10, comme cela sera détaillé ci-après.

L'attache moteur avant 6 est solidarisée au carter de soufflante 12, et est par exemple conçue de manière à pouvoir reprendre des efforts générés par le turboréacteur 2 selon les directions Y et Z, à l'aide de manilles/biellettes. A titre indicatif, cette attache avant 6 pénètre de préférence dans une portion d'extrémité circonférentielle du carter de soufflante 12.

L'attache moteur arrière 8 constitue une particularité de l'invention et sera plus amplement détaillée en référence aux figures suivantes. Elle est globalement interposée entre le carter d'éjection 17 et la structure rigide 10 du mât. Elle est quant à elle conçue de manière à pouvoir reprendre des efforts générés par le turboréacteur 2 selon la direction Z, ainsi que ceux s'exerçant selon les directions X et Y grâce à sa coopération particulière avec le dispositif de reprise 9, qui sera exposée ci-dessous.

Toujours en référence à la figure 1, on peut apercevoir que la structure 10 présente la forme d'un caisson s'étendant dans la direction X, ce caisson étant également appelé caisson de torsion. Il est classiquement formé par un longeron supérieur 26 et un longeron inférieur 28, ainsi que par deux panneaux latéraux 30 (un seul étant visible sur la figure 1) s'étendant tous les deux selon la direction X et sensiblement dans un plan XZ. A l'intérieur de ce caisson, des nervures transversales 32 agencées selon des plans YZ et espacées longitudinalement viennent renforcer la rigidité du caisson. Il est noté à titre indicatif que les éléments 26, 28 et 30 peuvent chacun être réalisés d'un seul tenant, ou bien par l'assemblage de sections jointives, qui peuvent éventuellement être légèrement inclinées les unes par rapport aux autres. Ici, le longeron inférieur 28 s'étend de préférence dans un plan incliné par rapport à l'horizontale, sur toute sa longueur, comme montré sur la figure 1. L'inclinaison est telle que le longeron inférieur 28, parallèle à la direction Y, se rapproche de l'axe 5 en allant vers l'arrière, dans le but de se rapprocher du carter d'éjection 17 afin de permettre la mise en place de l'attache moteur arrière 8 sur ce même carter 17. De préférence, l'ensemble des éléments formant le caisson sont réalisés en matériaux composites comprenant un mélange de résine et de fibres de verre et/ou de carbone.

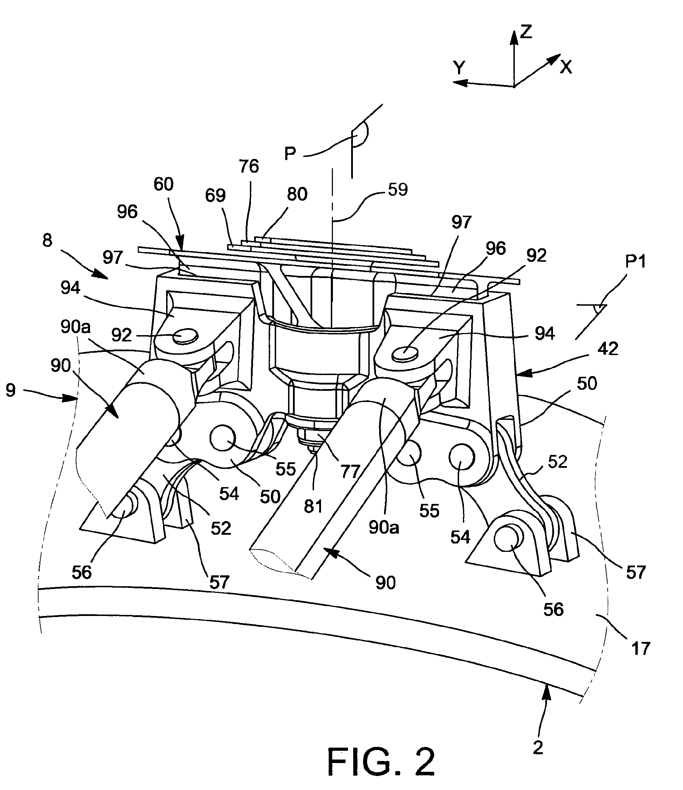

En référence aux figures 2 à 4, on peut voir une partie de l'attache moteur arrière 8 et du dispositif de reprise des efforts de poussée 9, dont certains éléments ont été volontairement omis, pour des raisons évidentes de clarté.

L'attache moteur arrière 8 comprend un corps 42 assimilable à une poutre transversale réalisée d'un seul tenant, et monté sur le caisson 10 d'une façon particulière à la présente invention, qui sera détaillée ci-après. Comme l'ensemble de la structure rigide 10, ce corps 42 agencé sous le longeron inférieur 28 présente le plan P, orienté selon les directions X et Z, comme plan de symétrie.

Au niveau d'extrémités latérales opposées, le corps 42 comporte une chape 50 sur laquelle est articulée une manille 52 par l'intermédiaire d'un axe 54 orienté selon la direction X. A titre indicatif, un second axe 55 orienté selon la direction X est également prévu entre ces deux éléments, mais monté avec jeu de manière à n'être opérant qu'en cas de défaillance/rupture de la liaison formée à l'aide de l'axe 54. Cela permet d'assurer une fonction de sécurité dite « Fail Safe » pour la transmission d'efforts selon la direction Z.

De plus, un autre axe 56 orienté selon la direction X est également prévu au niveau d'une extrémité inférieure de la manille 52, de manière à articuler cette dernière sur une ferrure/chape 57 montée fixement sur le carter 17 du turboréacteur 2.

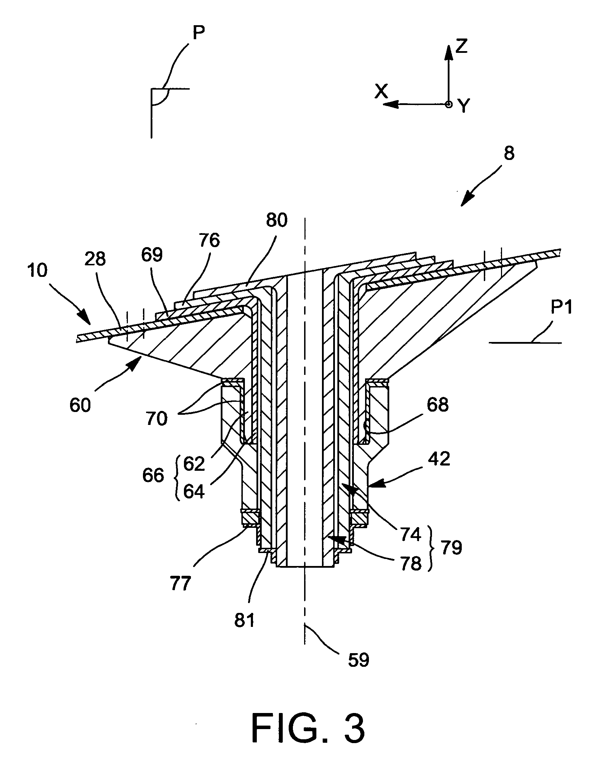

L'une des particularités de la présente invention consiste à monter le corps d'attache 42 de manière articulée par rapport au caisson 10, selon un axe d'articulation 59 passant par le plan de symétrie P. Pour ce faire, il est tout d'abord prévu une ferrure de support 60 plaquée au niveau de sa surface supérieure plane contre le longeron inférieur 28, extérieurement par rapport au caisson 10. La ferrure 60, montée fixement de manière conventionnelle sur le longeron inférieur 28, se termine vers le bas par un pion creux 62 orienté selon l'axe 59. Il forme, avec un pion creux annexe 64 de préférence concentrique et agencé intérieurement par rapport à celui-ci, un système d'axe d'articulation 66 du corps d'attache 42 sur le caisson 10. Comme cela est le mieux visible sur la figure 3, l'extrémité supérieure du pion creux annexe 64 prend la forme d'un épaulement 69 en appui contre la surface intérieure du longeron 28, le corps de ce pion annexe traversant en effet ce même longeron 28, ainsi que la ferrure de support 60.

Le système d'axe 66 orienté selon l'axe vertical 59 se loge dans un orifice correspondant 68 pratiqué dans le corps d'attache 42, et débouchant vers le haut. A titre indicatif, il est noté que pour faciliter les mouvements oscillatoires de rotation du corps d'attache 42 autour du système d'axe 66, des éléments référencés 70 à faible coefficient de frottement sont interposés entre les surfaces de contact.

La coopération entre l'orifice 68 et le pion creux 62 du système d'axe 66 permet d'assurer la reprise des efforts s'exerçant selon les directions X et Y. De plus, le pion annexe 64 permet de reprendre les efforts s'exerçant selon ces mêmes directions en cas de défaillance/rupture du pion 62. Cela permet avantageusement d'assurer une fonction de sécurité dite « Fail Safe » pour la transmission d'efforts selon les directions X et Z. Par ailleurs, il est noté que pour que ce chemin d'efforts passant par le pion creux 64 soit uniquement opérant lors d'une défaillance/rupture du pion 62, on prévoit alors de préférence un jeu fonctionnel entre les deux pions concentriques 62, 64.

Comme mentionné ci-dessus, le système d'axe d'articulation 66 est donc constitué d'un axe externe 62 coopérant intimement avec ledit orifice central 68, et d'un axe interne 64 dit « en attente », qui est installé avec jeu à l'intérieur de l'axe externe 62. Cela assure une redondance du chemin des efforts transmis par le système d'axe 66, et permet de ce fait d'assurer la fonction de sécurité « Fail Safe », tel que cela vient d'être présenté. Néanmoins, il serait alternativement possible de prévoir, sans sortir du cadre de l'invention, une solution dans laquelle le système d'axe d'articulation serait constitué de deux demi-axes symétriques accolés assurant la redondance du chemin d'efforts, étant donné qu'en cas de défaillance survenant sur l'un des demi-axes, les efforts sont alors transmis par l'autre demi-axe non-défaillant. D'autre part, une autre conception possible serait de prévoir le système d'axe solidaire de la poutre d'attache moteur arrière, et l'orifice central correspondant sur la structure primaire.

Pour maintenir le corps d'attache 42 selon la direction Z par rapport au caisson et à la ferrure de support 60 fixée sur ce dernier, il est prévu un tirant 74 traversant intérieurement le pion creux annexe 64, ainsi que le corps d'attache 42. Par conséquent, il traverse également la ferrure de support 60 et l'orifice 68, comme visible sur la figure 3. Pour assurer le maintien vertical, le tirant 74 dispose au niveau de son extrémité supérieure d'un épaulement 76 en appui contre l'épaulement 69 précité, et, au niveau de son extrémité inférieure faisant saillie vers le bas par rapport au corps 42, d'une portion filetée coopérant avec un écrou 77 plaqué contre ce même corps 42. Ainsi, le serrage de l'écrou 77 s'effectue jusqu'à obtenir un très faible jeu entre l'extrémité du système d'axe 66 et le fond de l'orifice correspondant 68, et/ou entre l'extrémité supérieure du corps 42 et la ferrure de support 60.

Le tirant 74 forme avec un tirant annexe 78 un système de tirant 79 orienté selon l'axe d'articulation vertical 59, le tirant 78 étant préférentiellement agencé concentriquement et intérieurement par rapport au tirant 74. Le tirant 78 dispose au niveau de son extrémité supérieure d'un épaulement 80 en appui contre l'épaulement 76 précité, et, au niveau de son extrémité inférieure faisant saillie vers le bas par rapport au tirant 74, d'une portion filetée portant un écrou 81 coopérant avec l'extrémité inférieure du tirant 74.

Comme visible sur la figure 3, les éléments creux et concentriques 64, 74, 78 traversent le longeron inférieur 28, impliquant que leurs épaulements 69, 76, 80 sont situés à l'intérieur du caisson, et superposés en étant au contact deux à deux.

La présence du tirant 74 permet d'assurer la reprise des efforts s'exerçant selon la direction Z. De plus, le tirant annexe 78 permet de reprendre les efforts s'exerçant selon cette même direction en cas de défaillance/rupture du tirant 74. Cela permet avantageusement d'assurer une fonction de sécurité dite « Fail Safe » pour la transmission d'efforts selon cette direction Z. Par ailleurs, il est noté que pour que ce chemin d'efforts passant par le tirant 78 soit uniquement opérant lors d'une défaillance/rupture du tirant 74, on prévoit alors de préférence un jeu fonctionnel entre l'écrou 81 et l'extrémité inférieure du tirant 74.

Ainsi, il est donc prévu un système de tirant 79 qui est logé à l'intérieur du système d'axe 66, et qui permet globalement de retenir le corps d'attache moteur 42 selon la direction Z. A l'instar dudit système d'axe 66, le système de tirant 79 est constitué de deux tirants capables de travailler conjointement ou indépendamment, afin d'assurer la redondance du chemin d'efforts. Dans une première solution, correspondant à celle représentée sur la figure 3, les deux tirants 74, 78 peuvent être accolés et travailler conjointement. Alternativement, il serait possible de prévoir que seul le tirant externe 74 soit travaillant, avec le tirant annexe 78 « en attente » à l'intérieur du tirant externe 74, c'est-à-dire en prévoyant un jeu entre l'écrou 81 et l'extrémité inférieure du tirant externe 74. D'autre part, il est précisé qu'un agencement inverse pourrait être adopté, dans lequel le système de tirant serait solidaire de la poutre d'attache moteur arrière, sans sortir du cadre de l'invention.

En outre, il est indiqué que la reprise des moments s'exerçant selon les directions X et Y s'effectue à l'aide du système d'axe d'articulation 66, par sa sollicitation en flexion.

L'articulation du corps d'attache moteur arrière 42 par rapport au caisson 10 est spécifiquement prévue pour que ce corps remplisse simultanément le rôle de palonnier du dispositif de reprise des efforts de poussée, comme cela va à présent être détaillé, toujours en référence aux figures 2 à 4.

Le dispositif 9 comprend globalement deux bielles latérales de reprise des efforts de poussée 90, chacune de ces bielles comportant une extrémité avant (non représentée sur ces figures) raccordée au carter de soufflante 12, par exemple sur ou à proximité d'un plan médian horizontal du turbomoteur 2.

Les deux bielles latérales 90, disposées de part et d'autre du plan P, ont chacune une extrémité arrière 90a raccordée à un palonnier formé par le corps 42, qui est donc articulé selon un axe vertical 59 passant par le plan P.

Une liaison mécanique, constituant la liaison par laquelle sont destinés à transiter les efforts de poussée en mode normal, est réalisée à l'aide d'un axe d'articulation 92 reliant l'extrémité arrière 90a avec des moyens de réception prenant la forme d'un chape 94 réalisée d'un seul tenant avec le corps 42. De préférence, les deux axes 92 sont orthogonaux par rapport au plan des bielles 90, et agencés, en vue de face, de part et d'autre du système d'axe d'articulation 66 et de son axe 59.

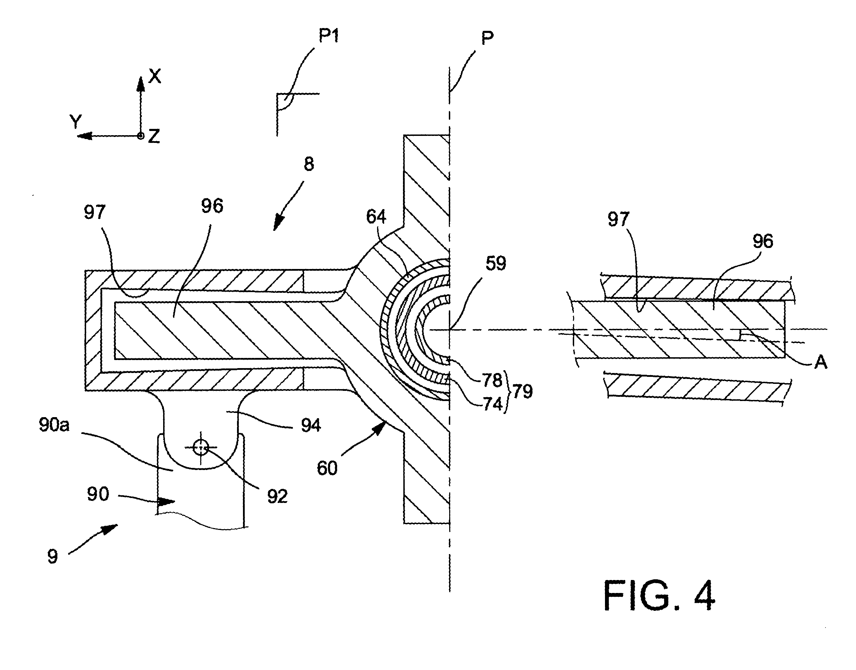

En référence plus particulièrement à la figure 4, on peut voir que le mât 4 comporte des moyens de butée judicieusement positionnés de sorte qu'en cas de défaillance du dispositif de reprise 9, pouvant par exemple prendre la forme d'une rupture de l'une des bielles 90 ou d'une rupture de l'un des axes 92, la rotation du palonnier 42 soit stoppée par ces moyens.

Dans le mode de réalisation préféré décrit, les moyens de butée prennent la forme de deux agencements disposés symétriquement par rapport au plan P, chaque agencement comprenant une saillie latérale 96 faisant partie intégrante de la ferrure 60, logée avec jeu dans une fente verticale 97 pratiquée dans le corps d'attache 42 formant palonnier, et s'ouvrant vers le haut.

Ainsi, en fonctionnement normal, la saillie 96 s'étendant verticalement et latéralement ne bute normalement pas sur la parois de la fente 97 dans laquelle elle demeure insérée, comme visible sur la demi-vue de gauche de la figure 4.

En revanche, lorsqu'une défaillance du type indiqué ci-dessus survient, le palonnier 42 qui n'est plus raccordé que par une seule bielle 90 pivote selon l'axe 59 jusqu'à ce que l'une de ses extrémités latérales vienne au contact de sa saillie 96 correspondante, formant moyens de butée. Plus précisément et comme montré sur la demi-vue de droite de la figure 4, c'est l'une des parois verticales de la fente 97 qui vient en butée contre sa saillie 96 correspondante.

Par conséquent, il est à comprendre que le positionnement des butées est retenu de manière à imposer un angle maximal A de rotation de ce palonnier autour de l'axe 59, cet angle maximal A, de préférence identique pour les deux sens de rotation, étant naturellement déterminé de sorte que la fonction de reprise des efforts de poussée puisse toujours être assurée par le dispositif de reprise 9, au moins durant une période déterminée.

Enfin, il est indiqué que les moyens de butée précités peuvent en outre servir, lorsqu'ils sont en configuration de butée, à la reprise des moments s'exerçant selon les directions X et Y, conjointement à l'aide du système d'axe d'articulation 66 sollicité en flexion.

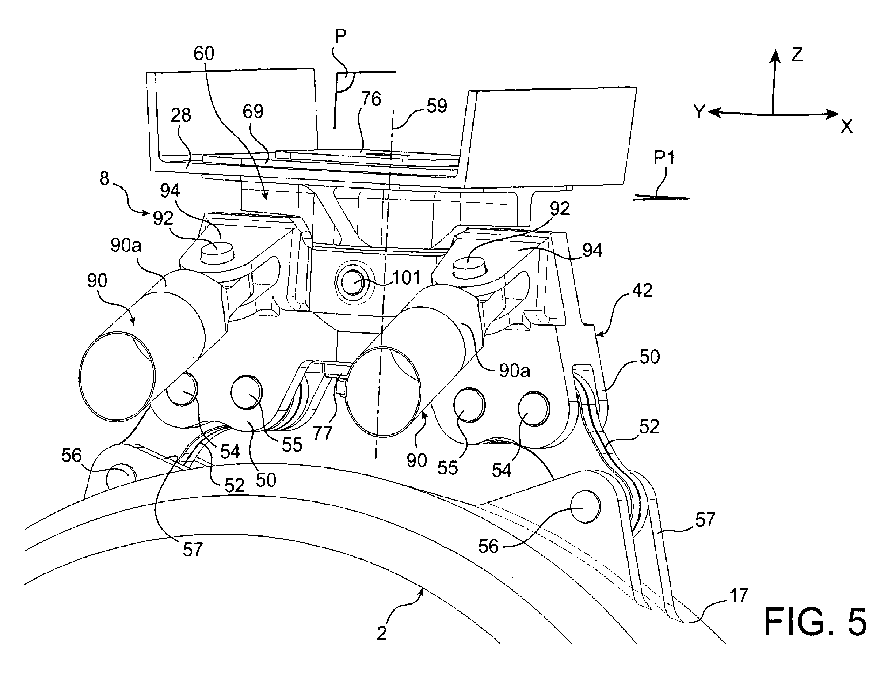

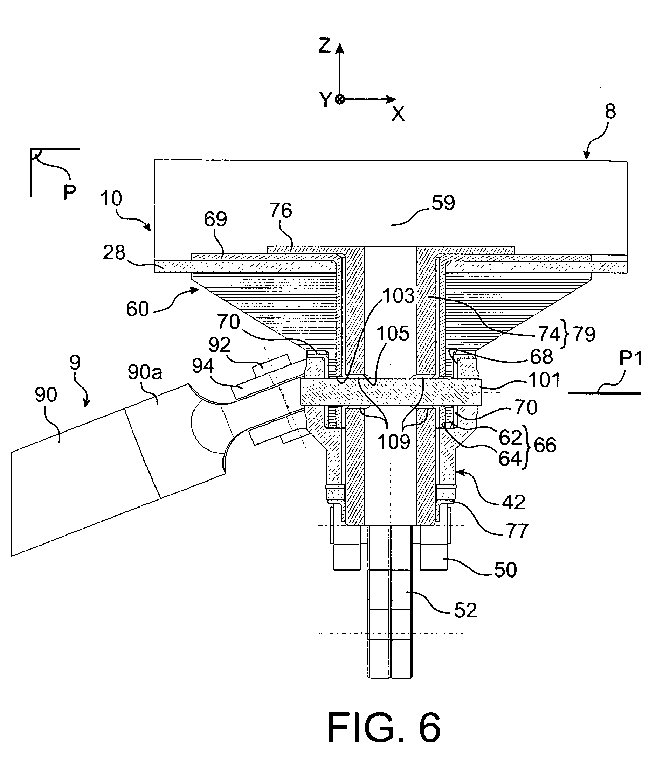

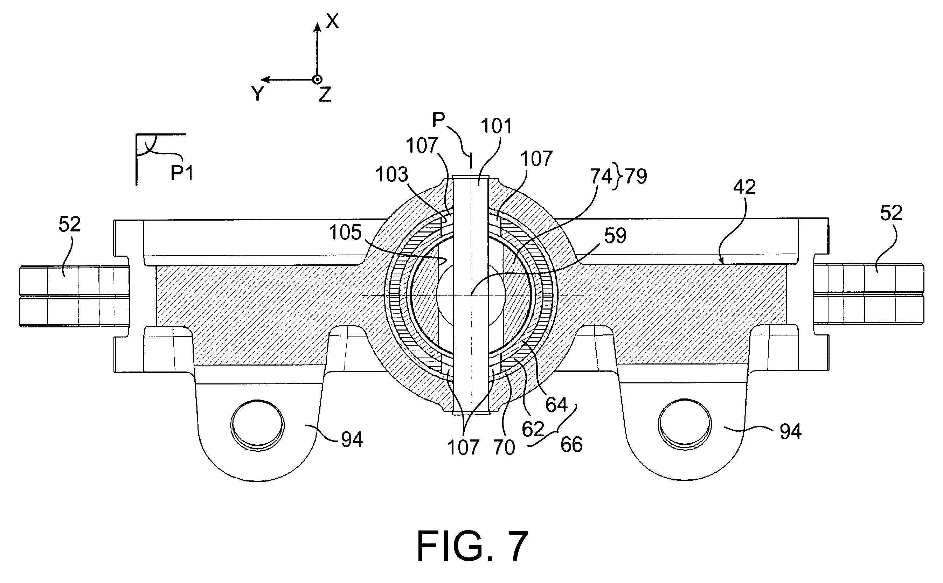

En référence à présent aux figures 5 à 7, on peut voir la partie arrière du système de montage du moteur, selon un autre mode de réalisation préféré de la présente invention. Elle est de conception sensiblement similaire à celle présentée ci-dessus, étant notamment précisé que sur les figures, les éléments qui portent les mêmes références numériques correspondent à des éléments identiques ou similaires.

Ainsi, on peut s'apercevoir que la différence principale avec le mode de réalisation précédent réside dans la conception des moyens de butée, positionnés de manière à pouvoir stopper, dans le deux sens, la rotation du palonnier 42 autour de son axe d'articulation 59 défini par le système d'axe 66.

En effet, il est prévu un ou plusieurs éléments de butée 101, prenant de préférence la forme d'une goupille orientée selon la direction X, et traversant de part en part le corps d'attache 42, en passant par l'axe d'articulation 59. L'élément de butée 101 dispose d'une extrémité avant solidarisée sur un flanc avant de corps d'attache 42 duquel elle fait saillie vers l'avant, et d'une extrémité arrière solidarisée sur un flanc arrière de corps d'attache 42 duquel elle fait saillie vers l'arrière.

L'élément de butée 42, par exemple cylindrique et orthogonal à l'axe d'articulation 59 qu'il intercepte, traverse avec jeu chacun des système de tirant 79 et système d'axe 66. Pour ce faire, le système d'axe 66 présente un passage 103 traversant diamétralement ses deux axes creux 62, 64, passage qui présente donc un diamètre supérieur à celui de la goupille 101. De la même manière, le système de tirant 79, qui est ici représenté qu'avec un unique tirant 74, présente un passage 105 traversant diamétralement son tirant 74, passage qui présente également un diamètre supérieur à celui de la goupille 101, et de préférence aussi supérieur à celui du passage 103.

Ainsi, en fonctionnement normal, la goupille 101 traverse les passages 103 et 105 sans être au contact de ceux-ci, ce qui laisse tout d'abord apparaître un jeu circonférentiel 107, vis-à-vis de l'axe 59, entre chaque extrémité de goupille 101 et le passage 103. Les deux jeux 107, prévus de manière diamétralement opposée sur le système d'axe 66, est suffisamment important pour autoriser les faibles rotations du palonnier 42 durant le fonctionnement normal, pendant lequel les bielles de poussée 90 sont chacun sollicitée et non-défaillante.

En revanche, lorsqu'une défaillance du type indiqué ci-dessus survient, le palonnier 42 qui n'est plus raccordé que par une seule bielle 90 pivote selon l'axe 59 en entraînant la goupille 101 qui suit le même mouvement, jusqu'à ce que cette goupille 101 vienne au contact du passage 103, à ses deux extrémités. Le double contact établi suite à la consommation des deux jeux 107 permet alors d'activer les moyens de butée, et induit un blocage en rotation du palonnier, en raison du blocage en rotation permanent du système d'axe 66 par rapport à la structure rigide du mât.

Ici encore, il est à comprendre que le positionnement et le dimensionnement des moyens de butée sont retenus de manière à imposer un angle maximal de rotation de ce palonnier autour de l'axe 59, cet angle maximal, de préférence identique pour les deux sens de rotation, étant naturellement déterminé de sorte que la fonction de reprise des efforts de poussée puisse être assurée par le dispositif de reprise 9 malgré la défaillance de bielle, et ce au moins durant une période déterminée.

De plus, il est précisé que la conception retenue est telle que la rotation du palonnier 42 entraîne une mise en contact de la goupille 101 avec le passage 103 avant que cette goupille 101 n'entre en contact avec l'autre passage 105, pratiqué sur le système de tirant 79. Cela permet de faire passer les efforts de poussée, en mode défaillant, par le système d'axe 66 prévu à cet effet, et non par le système de tirant 79 essentiellement conçu pour assurer la suspension du corps d'attache 42.

A cet égard, il est noté qu'en fonctionnement normal, la goupille 101 traverse donc les passages 103 et 105 sans être au contact de ceux-ci, ce qui laisse en outre apparaître un jeu 109 selon l'axe 59, entre chaque extrémité de goupille 101 et le passage 105. Ainsi, la reprise des efforts selon la direction Z parallèle à l'axe 59 s'effectue par la butée de l'extrémité inférieure du tirant 74 avec l'écrou 77, la goupille 101 restant alors inopérante en raison de la présence des deux jeux 109.

En revanche, lorsqu'une défaillance de la liaison de butée entre l'écrou et le tirant 74 survient, on observe un déplacement relatif selon l'axe d'articulation 59 entre le tirant 74 et le palonnier 42, jusqu'à ce que la goupille 101 vienne au contact du passage 105, à ses deux extrémités. Le double contact établi suite à la consommation des deux jeux verticaux 109 permet alors d'activer une butée, et induit un blocage en translation du palonnier par rapport au tirant 74. La butée activée fait alors partie intégrante du chemin de reprise des efforts verticaux en mode défaillant.

Bien entendu, diverses modifications peuvent être apportées par l'homme du métier au mât d'accrochage 4 de turboréacteur 2 pour aéronef qui vient d'être décrit, uniquement à titre d'exemple non limitatif. A cet égard, on peut notamment indiquer qui si le mât 4 a été présenté dans une configuration adaptée pour qu'il soit suspendu sous la voilure de l'aéronef, ce mât 4 pourrait également se présenter dans une configuration différente lui permettant d'être monté au-dessus de cette même voilure.

## Revendications

1. Mât d'accrochage (4) pour moteur (2) d'aéronef, ledit mât comportant une structure rigide (10) formant caisson ainsi qu'un système de montage du moteur (11) monté sur ladite structure rigide (10) et comportant notamment une attache moteur arrière (8) comprenant un corps d'attache (42) sur lequel est articulée au moins une manille (52) également destinée à être articulée sur le moteur (2), ledit système de montage du moteur (11) comprenant en outre un dispositif (9) de reprise des efforts de poussée générés par le moteur (2), comportant deux bielles latérales (90) raccordées à leur extrémité arrière (90a) à un palonnier monté articulé par rapport audit caisson (10),
**caractérisé en ce que** ledit corps d'attache (42) de l'attache moteur arrière (8) constitue ledit palonnier sur lequel lesdites deux bielles latérales (90) sont raccordées, ledit corps d'attache (42) étant monté articulé par rapport audit caisson (10) à l'aide d'un système d'axe d'articulation (66).

2. Mât d'accrochage (4) selon la revendication 1, **caractérisé en ce que** ledit corps d'attache (42) est monté articulé sur une ferrure de support (60) montée fixement sur ledit caisson (10), ladite ferrure de support intégrant un pion (62) appartenant audit système d'axe d'articulation (66), et logé dans un orifice correspondant (68) dudit corps d'attache (42).

3. Mât d'accrochage (4) selon la revendication 2, **caractérisé en ce qu'**il comprend un système de tirant (79) permettant de retenir ledit corps d'attache (42) par rapport à la ferrure de support (60) selon la direction d'un axe d'articulation (59) du palonnier défini par ledit système d'axe (66), ledit système de tirant (79) traversant chacun desdits corps d'attache (42) et ferrure de support (60), ainsi que ledit pion (62) formant pion creux.

4. Mât d'accrochage (4) selon l'une quelconque des revendications précédentes, **caractérisé en ce que** ledit corps d'attache (42) présente deux moyens de réception coopérant respectivement avec les deux bielles latérales (90), lesdits deux moyens de réception étant agencés, en vue de face, de part et d'autre du système d'axe d'articulation (66).

5. Mât d'accrochage (4) selon la revendication 4, **caractérisé en ce que** lesdits deux moyens de réception prennent chacun la forme d'une chape (94) réalisée d'un seul tenant avec ledit corps d'attache (42).

6. Mât d'accrochage (4) selon l'une quelconque des revendications précédentes, **caractérisé en ce qu'**il comprend des moyens de butée montés sur la structure rigide (10) formant caisson et positionnés de manière à pouvoir stopper, dans le deux sens, la rotation du palonnier (42) autour de son axe d'articulation (59) défini par ledit système d'axe (66).

7. Mât d'accrochage (4) selon la revendication 6 combinée à la revendication 2, **caractérisé en ce que** ladite ferrure de support (60) comprend deux saillies latérales (96) logées avec jeu respectivement dans deux fentes (97) pratiquées dans ledit corps d'attache (42), lesdites fentes et saillies formant conjointement lesdits moyens de butée.

8. Mât d'accrochage (4) selon l'une quelconque des revendications précédentes, **caractérisé en ce que** ledit système d'axe d'articulation (66) est agencé sensiblement verticalement.

9. Ensemble moteur (1) pour aéronef **caractérisé en ce qu'**il comprend un mât d'accrochage (4) selon l'une quelconque des revendications précédentes, ainsi qu'un moteur (2) monté fixement sur ledit mât.

10. Aéronef comprenant au moins un ensemble moteur (1) selon la revendication 9.

## Claims

1. An engine mounting structure (4) for an engine aircraft (2), where the said structure comprises a rigid structure (10) forming a caisson, together with an engine mounting system (11) mounted on the said rigid structure (10), and notably comprising a rear engine attachment (8), comprising an attachment strut (42) to which is connected at least one shackle (52), also intended to be connected to the engine (2), where the said engine mounting system (11) also comprises a system (9) for transmitting the thrust efforts generated by the engine (2), comprising two lateral connecting rods (90) connected at their rear end (90a) to a spreader beam mounted in articulated fashion relative to the said caisson (10),
**characterised in that** the said attachment strut (42) of 4 the rear engine attachment (8) constitutes the said spreader beam on to which the said two lateral connecting rods (90) are connected, where the said attachment strut (42) is mounted in articulated fashion relative to the said caisson (10) using an articulated shaft system (66).

2. An engine mounting structure (4) according to claim 1, **characterised in that** the said attachment strut (42) is mounted in articulated fashion on to a support bracket (60) mounted in fixed fashion on to the said caisson (10), where the said support bracket incorporates a slug (62) belonging to the said articulated shaft system (66), housed in a corresponding orifice (68) of the said attachment strut (42).

3. An engine mounting structure (4) according to claim 2, **characterised in that** it comprises a brace system (79) enabling the said attachment strut (42) to be retained relative to the support bracket (60) in the direction of a hinge line (59) of the spreader beam defined by the said articulated shaft system (66), in which the said brace system (79) traverses each of the said attachment struts (42) and support bracket (60), and also the said slug (62) forming a hollow slug.

4. An engine mounting structure (4) according to any of the previous claims, **characterised in that** the said attachment strut (42) has two reception devices cooperating respectively with the two lateral connecting rods (90), where the said two reception devices are positioned, as seen from the front, either side of the articulated shaft system (66).

5. An engine mounting structure (4) according to claim 4, **characterised in that** the said two reception devices each take the form of a cap (94) made from a single piece with the said attachment strut (42) .

6. An engine mounting structure (4) according to any of the previous claims, **characterised in that** it comprises stop devices mounted on to the rigid structure (10) forming a caisson and positioned so as to be able to stop, in both directions, the rotation of the spreader beam (42) around its hinge line (59) defined by the said articulated shaft system (66).

7. An engine mounting structure (4) according to claim 6 combined with claim 2, **characterised in that** the said support bracket (60) comprises two lateral protections (96) housed with some play respectively in two slots (97) made in the said attachment strut (42), where the said slots and projections jointly form the said stop devices.

8. An engine mounting structure (4) according to any of the previous claims, **characterised in that** the said articulated shaft system (66) is positioned roughly vertically.

9. An engine unit (1) for aircraft **characterised in that** it comprises an engine mounting structure (4) according to any of the previous claims, together with an engine (2) mounted in fixed fashion on to the said structure.

10. An aircraft including at least one engine unit (1) according to claim 9.

## Patentansprüche

1. Aufhängungssystem (4) für ein Luftfahrzeugtriebwerk (2), umfassend eine starre Struktur (10), die einen Kasten bildet, sowie ein Triebwerkanbringungssystem (11), das an der starren Struktur (10) angebracht ist und insbesondere eine hintere Triebwerkaufhängung (8) aufweist, die einen Halterungskörper (42) umfasst, an dem mindestens ein Schwingarm (52) beweglich befestigt ist, der ebenfalls beweglich an dem Triebwerk (2) befestigt ist, wobei das Triebwerkanbringungssystem (11) ferner eine Vorrichtung (9) zur Aufnahme von durch das Triebwerk (2) erzeugten Schubkräften umfasst, die zwei seitliche Stangen (90) aufweist, die an ihrem hinteren Ende (90a) an einer Traverse befestig sind, die in Bezug auf den Kasten (10) beweglich angebracht ist,
**dadurch gekennzeichnet, dass** der Halterungskörper (42) der hinteren Triebwerkaufhängung (8) die Traverse bildet, an der die zwei seitlichen Stangen (90) befestigt sind, wobei der Halterungskörper (42) mit Hilfe eines Gelenkachsensystems (66) in Bezug auf den Kasten (10) beweglich angebracht ist.

2. Aufhängungssystem (4) nach Anspruch 1, **dadurch gekennzeichnet, dass** der Halterungskörper (42) an einem Trägerbeschlag (60), der fest an dem Kasten (10) angebracht ist, beweglich angebracht ist, wobei der Trägerbeschlag als Bestandteil einen Bolzen (62) aufweist, der zu dem Gelenkachsensystem (66) gehört und in einer entsprechenden Öffnung (68) des Halterungskörpers (42) sitzt.

3. Aufhängungssystem (4) nach Anspruch 2, **dadurch gekennzeichnet, dass** es ein Zugstangensystem (79) umfasst, das ein Zurückhalten des Halterungskörpers (42) in Bezug auf den Trägerbeschlag (60) in Richtung einer Gelenkachse (59) der Traverse, die durch das Achsensystem (66) festgelegt ist, gestattet, wobei sich das Zugstangensystem (79) durch jeweils den Halterungskörper (42) und den Trägerbeschlag (60) sowie den einen Hohlbolzen bildenden Bolzen (62) erstreckt.

4. Aufhängungssystem (4) nach einem der vorhergehenden Ansprüche, **dadurch gekennzeichnet, dass** der Halterungskörper (42) zwei, jeweils mit den zwei seitlichen Stangen (90) zusammenwirkende Aufnahmemittel aufweist, wobei die zwei Aufnahmemittel, von vorne gesehen, auf beiden Seiten des Gelenkachsensystems (66) angeordnet sind.

5. Aufhängungssystem (4) nach Anspruch 4, **dadurch gekennzeichnet, dass** die zwei Aufnahmemittel jeweils die Form eines Gabelkopfs (94), der in einem Stück mit dem Halterungskörper (42) ausgerührt ist, aufweisen.

6. Aufhängungssystem (4) nach einem der vorhergehenden Ansprüche, **dadurch gekennzeichnet, dass** es Anschlagmittel umfasst, die an der einen Kasten bildenden starren Struktur (10) angebracht sind und derart positioniert sind, dass sie in zwei Richtungen eine Rotation der Traverse (42) um deren Gelenkachse (59), die durch das Achsensystem (66) festgelegt ist, stoppen können.

7. Aufhängungssystem (4) nach Anspruch 6 in Kombination mit Anspruch 2, **dadurch gekennzeichnet, dass** der Trägerbeschlag (60) zwei seitliche Vorsprünge (96) umfasst, die mit einem Spiel jeweils in zwei, in dem Halterungskörper (42) ausgeführten Schlitzen (97) sitzen, wobei die Schlitze und die Vorsprünge gemeinsam die Anschlagmittel bilden.

8. Aufhängungssystem (4) nach einem der vorhergehenden Ansprüche, **dadurch gekennzeichnet, dass** das Gelenkachsensystem (66) im wesentlichen vertikal angeordnet ist.

9. Triebwerkanordnung (1) für ein Luftfahrzeug, **dadurch gekennzeichnet, dass** sie ein Aufhängungssystem (4) nach einem der vorhergehenden Ansprüche sowie ein fest an dem System angebrachtes Triebwerk (2) umfasst.

10. Luftfahrzeugs das mindestens eine Triebwerkanordnung (1) nach Anspruch 9 aufweist.
